# EUROPEAN PATENT APPLICATION

(11) **EP 2 042 240 A1**
(43) Date of publication of application: **01.04.2009**
(21) Application number: 07117572.3
(22) Date of filing: 28.09.2007
(51) Int. Cl.: B04C 5/15

(54) **A dust discharge outlet for a separator device, a separator device and a method for closing a passageway at the dust discharge outlet**

(71) Applicant: HTC SWEDEN AB, 614 22 Söderköping (SE)
(72) Inventor: Sunesson, Johan, 582 27 Linköping (SE)
(74) Representative: Bokinge, Ole

(57) **Abstract**

There is provided a dust discharge outlet (6) for a separator device (1) arranged for separating particles contained in an air stream. The dust discharge outlet (6) comprises a discharge opening (7) and to which dust discharge outlet (6) a substantially airtight collecting bag (8) is receivable. A passageway (7,11) for discharging dust particles into the collecting bag (8) is formed by the discharge opening (7) and a portion (11) of the receivable collecting bag (8). A closure body (10) is arranged in the passageway (7,11) for sealing against the laterally contracted collecting bag (8) at a negative pressure in the passageway (7,11). There is further disclosed a separator device comprising the dust discharge outlet (6), and a method for closing the passageway (7,11).

## Description

### Technical field of the invention

The present invention generally relates to dust discharge outlet for a separator device arranged for separating particles contained in an air stream. The invention also relates to a separator device and a method for closing a passage way at the dust discharge outlet.

### Technical background

During abrasive processes, such as for example grinding and/or polishing of hard floor surfaces, considerable amounts of residual particles are generated. For process efficiency as well as for health reasons, these particles need to be efficiently removed.

An arrangement for the collection of the residual particles is known from WO2005/118111A1, which discloses a device for collecting particles, wherein a particle containing airflow is passed through several separation units in the form of, in turn, a cyclone separator, a coarse filter, and a micro filter unit.

The separation units are arranged in a common casing, and the airflow is passed through the device by means of a vacuum arrangement wherein the suction side of a fan brings particle-filled air through an inlet at the top of the cyclone separator.

The function of such separator devices is well known in the art; when the airflow circulates down inside the cone shaped side wall of the cyclone, particles are deposited along the way without the use of filters, through vortex separation. This means, rotational effects and gravity are used to separate particles from the airflow. The airflow then raises upwards again along the axis of the cyclone, whereafter, to further reduce the number of particles, it is passed through a coarse filter arranged above the cyclone separator. Finally, the airflow is passed through a micro filter arranged to collect smaller particles still present in the airflow.

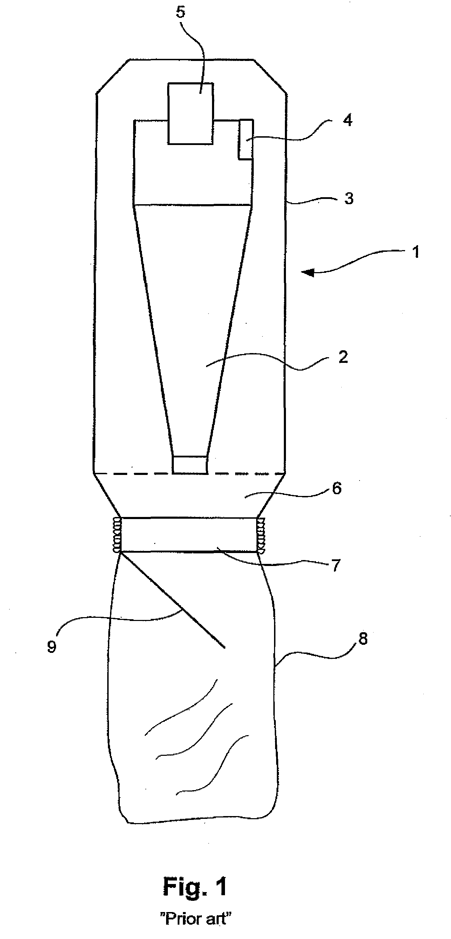

Furthermore, the cyclone comprises a bottom part arranged with a trap door (see Fig. 1) that is opened after the vacuum that is present in the cyclone while it is in operation has been switched of. The trap door then opens by gravity and releases the particles that have been deposited, for example, during the vortex separation. The released particles are collected in a plastic bag, a collection vessel or a tubular bag system. A reason for the arrangement with trap door or valve is to provide a closed system only having an air inlet and outlet in order to operate the cyclone separator, while avoiding the danger of the bag, for example, being sucked up into the cyclone separator and imploding. Notwithstanding, there is still a risk that the trap door does not shut tight, and thus not providing the closed system. Furthermore, the arrangement relies on the pivotally arranged space-demanding trap door that may be susceptible to failure leading to stoppage during operation.

WO2006/062472 A1 discloses a separator device for collecting particles from airflow similar to the device described above, the device being arranged with the trap door. In addition, a trap door less device for collecting particles is disclosed, wherein a cyclone device is arranged for separating and transporting particles from the airflow to a collection drum arranged at the bottom of the separator device. A bag is attached to an outlet of the cyclone device leading to the collection drum, which has a casing that provides a seal against the atmosphere around the attached bag. The separator device is so arranged that, while it is in operation, there is created a pressure inside the bag that is relatively higher than the pressure between the casing and the outside the bag. Accordingly, the bag is pressed into contact with the walls and bottom of the collection drum minimizing the risk of the bag being sucked up into the cyclone separator and imploding. Notwithstanding, such a separator device is rather space demanding and complex, wherein there is provided a complicated way of preventing the bag from being sucked up into the cyclone. Furthermore, the device may be difficult to handle while it is in operation requiring a cumbersome process of emptying or replacing the bag enclosed inside the collection drum. As a consequence, the separator device may be susceptible to failure and stoppage during operation.

Therefore, there is a need for an improved and/or alternative separator device for separating and collecting particles from an air stream that is easy to handle and requiring little space and being non-complex, while still providing the possibility of preventing the bag from being sucked up into the separator device while the separator device is operating.

### Summary of the invention

In view of the aforementioned respects of known separator devices, an object of the present invention is to provide an improved and/or alternative separator device.

The object is wholly or partially achieved by a dust discharge outlet for a separator device, a separator device and a method for closing the dust discharge outlet according to the respective independent claim.

Embodiments are set forth in the appended dependent claims, in the following description and in the drawings.

According to a first aspect, there is provided a dust discharge outlet for a separator device arranged for separating particles contained in an air stream. The dust discharge outlet comprises a discharge opening and to which dust discharge outlet a substantially airtight collecting bag is receivable. A passageway for discharging dust particles into the collecting bag is formed by the discharge opening and a portion of the receivable collecting bag. The dust discharge outlet is characterized in that a closure body is arranged in the passageway for sealing against the laterally contracted collecting bag at a negative pressure in the passageway.

By providing the dust discharge outlet with the closure body there is provided a simple and functionally safe way of closing the passageway, while vacuum (negative pressure) is present in the passageway. Accordingly, there is provided a dust discharge outlet for a separator device for separating and collecting particles from an air stream, wherein a separator device comprising the device dust discharge outlet is easy to handle and requiring little space and being non-complex, while still providing the possibility of preventing the bag from being sucked up into the cyclone separator while the device is operating. The vacuum may be provided by a suction side of a vacuum source that is connected to an air stream outlet of the separator device, which separator device in turn comprises the dust discharge outlet. Thus, the negative pressure is provided by a suction force in a direction from the bag up through the passageway and the dust the discharge outlet, which suction force in turn provides that the collecting bag is brought against the closure body.

According to a second aspect, there is provided a separator device comprising the dust discharge outlet.

Such a separator device benefits from the advantages provided by the dust discharge outlet. Accordingly, there is provided a separator device that is easy to handle and requiring little space and being non-complex, while still providing the possibility of preventing the bag from being sucked up into the separator device while the separator device is operating.

According to a third aspect, there is provided a method for closing a passageway at a dust discharge outlet for a separator device arranged for separating particles contained in an air stream. The dust discharge outlet comprises a discharge opening and to which dust discharge outlet a substantially airtight collecting bag is receivable. The passageway for discharging dust particles into a collecting bag is formed by the discharge opening and a portion of the receivable collecting bag. Furthermore, a closure body is arranged in the passageway. The method comprises: applying a negative pressure in the passageway; bringing first portions of the received collecting bag against the closure body; and sealing the first portions against the closure body so as to close the passageway.

Such a method provides a simple and functionally safe way of closing the passageway.

The following embodiments concerns all aspects mentioned above, if not otherwise specified.

According to an embodiment, the closure body may be arranged at a distance from edges of the discharge opening.

By this arrangement there is provided a possibility for the collecting bag to seal against the closure body.

According to an embodiment, the closure body may be arranged below the discharge opening during operation.

By this arrangement there is provided a possibility of a simple arrangement for the collecting bag to seal against the closure body.

According to an embodiment, the closure body may be connected to the dust discharge outlet via a barred member comprised in the discharge opening.

Such a barred member provides a possibility of connecting the collecting bag to the dust discharge outlet. The use of the barred member also provides the possibility of avoiding the danger of any collecting bag portion, for example, being sucked up into the separator device and imploding, while the barred member still allows separated dust particles to be discharged through openings of the barred member with no or low resistance. Given the knowledge of the barred member, the skilled person will appreciate the necessary dimensions and shapes of the barred member for providing the functionality as discussed above.

According to an embodiment, the closure body may be connected to the barred member via an interconnecting member.

The interconnecting member provides a possibility of arranging at closure body at a required position for the specific application.

The interconnecting member may be a chain, rod, thread or wire.

According to an embodiment, the collecting bag may be of a polymer material.

A polymer material such as an olefin plastic material provides a substantially airtight material that is flexible providing the possibility of sealing the collecting bag against the closure body.

According to an embodiment, the method further comprises: bringing second portions of the collecting bag against the barred member, wherein the barred member prevents the collecting bag to pass through the barred member.

The invention will now be explained in more detail below with reference to embodiments and examples.

### Description of the drawings

Fig. 1 is a schematic sectional side view of a separator device similar to prior art devices;
Fig. 2 is a schematic side view showing one embodiment of a dust discharge outlet to which a collecting bag is attached.
Fig. 3 shows the embodiment of Fig 2 as a side view of the cross section B-B as indicated in Fig 2.
Fig. 4 is a schematic side view showing the embodiment of Fig 2, wherein the collecting bag is brought in contact with a closure body.
Fig. 5 shows a view from below of a detail in the dust discharge outlet.
Figs 6a-b show different embodiments of a closure body as viewed from the side.

### Detailed description of the invention and embodiments

Fig. 1 shows, in a schematic and sectional side view, a separator device 1 similar to prior art devices described above. The separator device comprises a cyclone separator 2 confined in a housing 3, an air stream inlet 4, and an air stream outlet 5. As would be appreciated by the skilled person in the art, the air stream outlet 5 may be connected via filter packages to the suction side of a (not shown) vacuum source of conventional type.

A portion 6 forming a dust discharge outlet 6 is arranged at the bottom of the separator device 1. The dust discharge outlet 6 comprises a discharge opening 7 for separated particles, leading to a collecting bag 8, such as a well known tubular bag system (e.g., see WO 2006/062472), arranged for the collection of particles deposited in the cyclone separator 2, for example. In Fig. 1, for illustrative purpose only, the discharge opening 7 is provided with the prior art trap door 9 as a closure for sealing against the discharge opening 7 under vacuum (negative pressure) that is present in the cyclone separator 2 as well as in the discharge opening 7. As discussed above, the trap door 9 opens by gravity, when the vacuum that is present in the cyclone separator 2 while it is in operation has been switched of, and releases the particles, which have been deposited, into the collecting bag 8.

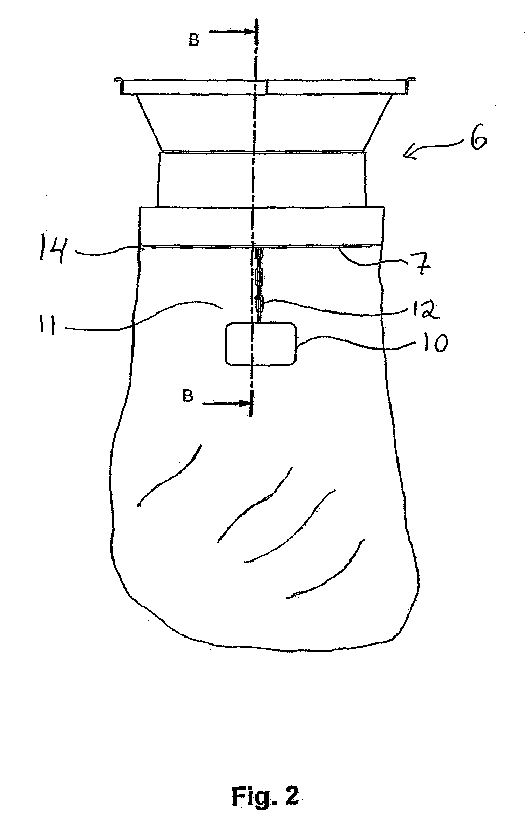

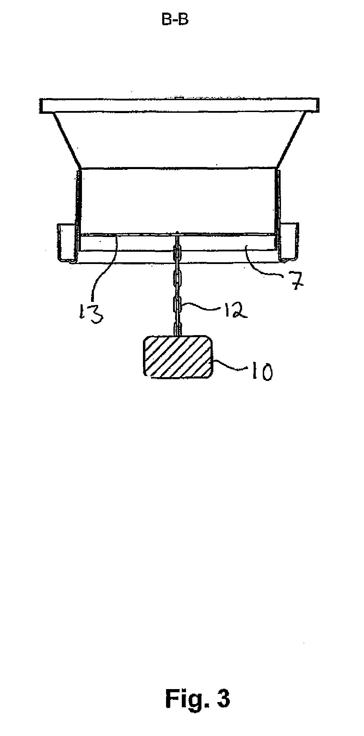

Figs 2 to 4 illustrate one embodiment, wherein the dust discharge outlet 6 comprises a closure body 10 provided below the discharge opening 7 in a passageway 7,11 defined by the discharge opening 7 and a portion 11 of the collecting bag 8. The closure body 10 is connected to the dust discharge outlet 6 via connecting devices 12,13, namely a chain 12 and a barred member 13 that is arranged in the discharge opening 7 as shown in Fig. 3. The closure body is attached to one end of the chain 12 and the other end of the chain 12 is in turn connected to the barred member 13.

By such a closure body 10 supported by the connecting devices 12,13 together with the substantially airtight collecting bag 8, there is provided a simple and functionally safe way of closing the passageway 7,11, while vacuum (negative pressure) is present in the passageway 7,11, and for releasing the deposited particles into said collecting bag 8 upon switching of the vacuum.

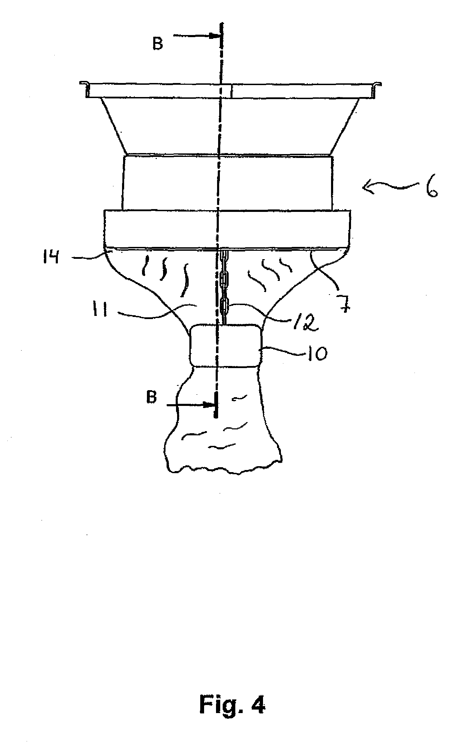

During operation of the separator device 1, the not shown vacuum engine brings a particle filled air stream through the inlet 4 and into a separator such as the cyclone separator 2, where a separation takes as described above. As illustrated in Fig. 4, the applied vacuum also leads to that at least a portion of the collecting bag 8 having an opened end 14 that is received by the dust discharge outlet 6 in a known way, is sucked up towards the closure body 10 and discharge opening 7 leading to tight sealing of the collecting bag 8 against the closure body 10, so as to substantially air tightly close the passageway 7,11. Upon releasing the vacuum, the collecting bag is released from the closure body 10 and separated particles are discharged into the collecting bag 8.

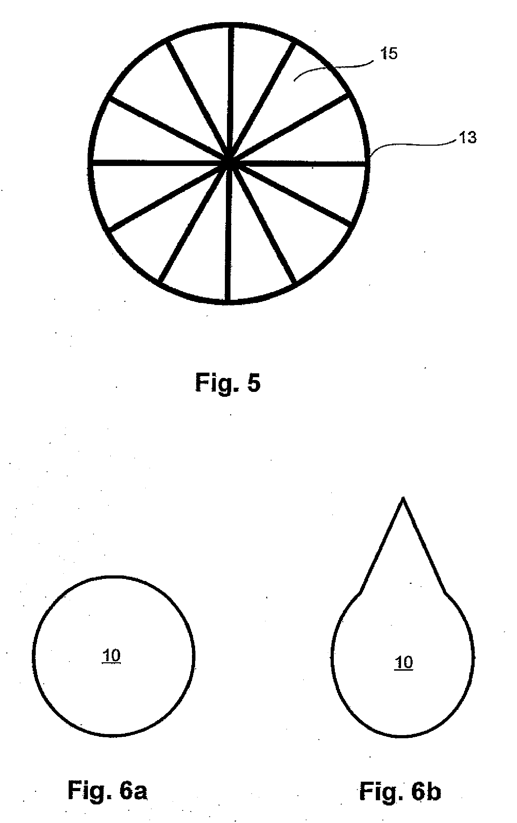

Fig. 5 shows a schematic view from below of one embodiment of the barred member 13 having openings 15. The skilled person in the art will appreciate that there are many ways of forming the barred member 13 so as to provide its function as a connecting device 13 for the closure body 10.

According to one embodiment, the openings 15 in barred member 13 have certain shapes and sizes so as to allow deposited particles to pass through the openings 15 with no or low resistance during discharging of the separated particles in the separator into the collecting bag 8, while the barred member 13 prevents a portion of the collecting bag 8 that is sucked up to towards and against the barred member 13 at a negative pressure in the passageway 7,11 to pass through the barred member 13 and into the separator device 1. Given the knowledge of the barred member 13, the skilled person will appreciate the necessary dimensions and shapes of the barred member 13 for providing the functionality as discussed above.

As discussed above, the closure body 10 may be connected to the barred member 13 via a chain 12. According to further embodiments, the closure body 10 may be connected to the barred member 13 via a wire, thread, rod or the like.

According to one embodiment, the closure body 10 may be directly attached to the barred member 13.

According to one embodiment, the closure body 10 may be connected to the center of barred member 13.

Furthermore, the shape, size and position of the closure body 10 are chosen so as to allow the collecting bag to be sucked up against the closure body 10 at a negative pressure in the passageway 7,11 so as to form a substantially airtight closing of the passageway 7,11.

The closure body 10 should be formed to not present any sharp portion that may disrupt the collecting bag 8 while the latter is in contact with the closure body 10.

According to one embodiment, the closure body 10 as seen in Fig. 3, for example, may have a circular cross section as viewed from below, wherein the shape provides the functionality as described above.

In various embodiments the closure body 10 may be drop formed, ball formed or the like. Figs 5a-b show examples of said embodiments of the shape of the closure body 10 viewed from the side.

According to one embodiment, the separator device 1 is provided for collecting dust and debris generated during abrasive processes such as grinding and/or polishing of hard floor surfaces.

According to one embodiment, the separator device 1 comprises a cyclone separator 2 and/or at least one filter. Each filter may be selected from a coarse filter and a micro filter.

## Claims

1. A dust discharge outlet (6) for a separator device (1) arranged for separating particles contained in an air stream, wherein the dust discharge outlet (6) comprises a discharge opening (7) and to which dust discharge outlet (6) a substantially airtight collecting bag (8) is receivable, wherein a passageway (7,11) for discharging dust particles into the collecting bag (8) is formed by the discharge opening (7) and a portion (11) of the receivable collecting bag (8), **characterized in that** a closure body (10) is arranged in the passageway (7,11) for sealing against the laterally contracted collecting bag (8) at a negative pressure in the passageway (7,11).

2. The dust discharge outlet according to claim 1, wherein the closure body (10) is arranged at a distance from edges of the discharge opening (7).

3. The dust discharge outlet according to claim 1 or 2, wherein the closure body (10) is arranged below the discharge opening (7) during operation.

4. The dust discharge outlet according to claim 1, 2 or 3, wherein the closure body (10) is connected to the dust discharge outlet (6) via a barred member (13) comprised in the discharge opening (7).

5. The dust discharge outlet according to claim 4, wherein the closure body (10) is connected to the barred member 13 via an interconnecting member (12).

6. The dust discharge outlet according to claim 5, wherein the interconnecting member (12) is a chain, rod, thread or wire.

7. The dust discharge outlet according to any one of the preceding claims, wherein the collecting bag (8) is of a polymer material.

8. A separator device comprising the dust discharge outlet (6) as claimed in any one of the preceding claims.

9. Method for closing a passageway (7,11) at a dust discharge outlet (6) for a separator device (1) arranged for separating particles contained in an air stream, wherein the dust discharge outlet (6) comprises a discharge opening (7) and to which dust discharge outlet (6) a substantially airtight collecting bag (8) is receivable, wherein the passageway (7,11) for discharging dust particles into a received collecting bag (8) is formed by the discharge opening (7) and a portion of the receivable collecting bag, **characterized in that** a closure body (10) is arranged in the passageway (7,11), wherein the method comprises:
- applying a negative pressure in the passageway (7,11);
- bringing first portions of the received collecting bag (8) against the closure body (10);
- and sealing the first portions against the closure body (10) so as to close the passageway (7,11).

10. The method according to claim 9, wherein the closure body (10) is arranged at a distance from edges of the discharge opening (7).

11. The method according to claim 9, wherein the closure body (10) is arranged below the discharge opening (7) during operation.

12. The method according to claim 9, 10 or 11, wherein the closure body (10) is connected to the dust discharge outlet 6 via a barred member (13) comprised in the discharge opening (7).

13. The method according to according to claim 12, wherein the closure body (10) is connected to the barred member 13 via an interconnecting member (12).

14. The method according to claim 13, wherein the interconnecting member (12) is a chain, rod, thread or wire.

15. The method according to any one of claims 9 to 14, wherein the collecting bag (8) is of a polymer material.

16. The method according to any one of claims 9 to 15, further comprising:
- bringing second portions of the collecting bag (8) against the barred member (13), wherein the barred member (13) prevents the collecting bag (8) to pass through the barred member (13).
